# EUROPEAN PATENT SPECIFICATION

(11) **EP 3 844 111 B1**
(45) Date of publication and mention of the grant of the patent: **21.08.2024**
(21) Application number: 19780014.7
(22) Date of filing: 28.08.2019
(51) Int. Cl.: C02F 1/463, C02F 1/465, C02F 1/34, C02F 1/36, C02F 1/461, C02F 101/20, C02F 101/32

(54) **METHOD AND DEVICE FOR THE CLEANING OF ELECTRODE CELLS WHICH ARE USED FOR WASTE WATER TREATMENT BY ELECTROCOAGULATION**
VERFAHREN UND VORRICHTUNG ZUR REINIGUNG VON ELEKTRODENZELLEN, DIE ZUR ABWASSERBEHANDLUNG DURCH ELEKTROKOAGULATION EINGESETZT WERDEN
PROCÉDÉ ET DISPOSITIF DE NETTOYAGE DE CELLULES D'ÉLECTRODES UTILISÉES POUR LE TRAITEMENT DES EAUX USÉES PAR ÉLECTROCOAGULATION

(30) Priority: 28.08.2018 BE 201805601
(43) Date of publication of application: 07.07.2021
(73) Proprietor: Noah Water Solutions BVBA, Gavere 9890 (BE)
(72) Inventor: PARMENTIER, Dries, 9890 Gavere (BE); VAN MEIRHAEGHE, Rik, 9890 Gavere (BE)
(74) Representative: Brantsandpatents bv
(86) International application number: PCT/IB2019/057258
(87) International publication number: WO 2020/044265

(56) References cited:
- EP-B1- 3 268 315
- DE-A1- 102005 022 382
- JP-A- 2008 253 959
- KR-B1- 101 221 565
- US-A1- 2007 029 201
- US-A1- 2015 251 932

## Description

### TECHNICAL FIELD

The invention relates to a method for removing contaminants from wastewater by electroflotation or electrocoagulation, in which the wastewater to be cleaned is passed through an asymmetrical electrolytic cell, resulting in a cell reaction in which both metal hydroxide and hydrogen gas are produced. For metal hydroxides with low solubility, impurities coagulate with the metal hydroxides into flakes.

### PRIOR ART

Electrocoagulation is the coagulation or flocculation of dissolved or suspended solids using electricity. At the cathode, the electrolytic cell produces a gas, usually hydrogen gas. At the anode, the electrolytic cell produces metal ions. These ions act as coagulants for the impurities in the wastewater. The gas provides a buoyant effect for the resulting flakes, which are then mechanically separated from the water.

Electrocoagulation is known from US patent publications US 5,888,359 and US 6,086,732.

A problem with electrocoagulation is the contamination of the anode. Contamination coagulates at the anode, where metal ions are formed. Contamination of the anode lowers the efficiency of the electrolytic cell. A method for cleaning the electrolytic cell is known from WO 2003/062152. Therein, the laminar flow pattern in the electrolytic cell is broken at each flush, thereby removing the contaminating film on the anode.

US 2007/029201 discloses a method and apparatus for removing impurities from waste water by electroflotation. The waste water to be cleaned is conducted through an electrolytic cell. Electrolysis is performed between two electrodes of different electronegativities, such that the more electronegative electrode, which is non-wearing in a cleaning process, is used for producing hydrogen gas and hydroxyl ions from water.

DE 10 2005 022382 discloses an electrolysis (especially electrocoagulation) reactor has at least one ultrasonic generator for cleaning at least one of the at least two groups of electrodes. An independent claim is also included for cleaning a liquid-electrolyzing reactor by filling the reactor with the liquid and ultrasonically cleaning at least one group of electrodes.

JP 2008 253959 discloses an electrolytic treatment tank having a double structure composed of an almost cylindrical cathode also used as a part of a container and an almost cylindrical anode provided inside the cathode so as to leave a definite interval, a cleaning instrument having the annular brush coming into contact with the surfaces of both electrodes and the rodlike handle piercing through the opening provided to the container to protrude to the outside are provided to slide the cleaning instrument by operating the handle.

KR101221565 B discloses device for removing contaminants from wastewater by means of electrocoagulation, comprising two metal electrodes, one being coupled to a negative pole of a power source and the other being coupled to a positive pole of the power source, with an electrolysis space between the electrodes, one electrode being made in its surface layer of a more electronegative material than the other electrode.

EP3268315 discloses a device wherein electrolytic treatment is combined with ultrasound.

### SUMMARY OF THE INVENTION

In the first aspect, the invention comprises a method for cleaning the electrode cells used for removing contaminants from wastewater by electrocoagulation as defined in claim 1, the method comprising the following steps:
a) passing the wastewater to be purified through an electrolytic cell which is provided with two metal electrodes with different electronegativities, consisting of coaxial pipes with the inner pipe comprising the more electronegative electrode,
b) performing electrolysis between the two electrodes, such that the more electronegative electrode, which does not wear in a cleaning process, is used to produce hydrogen gas and hydroxyl ions from water, and that the less electronegative electrode, which is an active, wearing electrode in a cleaning process, is used to produce metal ions in a solution to be cleaned,
c) producing an electric field in the electrolytic cell, whereby desired redox reactions take place to isolate one or more contaminants from the wastewater in the form of flakes,
d) passing the wastewater with said flakes from the electrolytic cell to a separation device for flakes and purified water, and
e) producing axial waves in the wastewater along the inner surface of the outer electrode intermittently, wherein the mechanical production of axial waves is produced by rotation of a ring provided with vane-shaped brushes, said vane-shaped brushes consisting of brush bristles, wherein said brush bristles do not touch the surface of the wearing electrode.

Axial waves help the accumulation of pollution along the surface of the anode. These are advantageous over radial and tangential waves or turbulent flow patterns as the eddies as a result of the above lead to the break-up of the coagulated flakes.

This makes the process more efficient and easier to manage. With rapid accumulation of contamination along the anode, the capacity of the cell must be continually increased to guarantee the same water purification. The process according to the first aspect counteracts this contamination, as a result of which electricity consumption is reduced, and the process has to be adjusted less regularly.

In the second aspect, the invention relates to a device for removing contaminants from wastewater by means of electrocoagulation as defined in claim 5, comprising two coaxial tubular metal electrodes, an inner and an outer pipe, the inner pipe being coupled to a negative pole of a power source and the outer pipe being coupled to a positive pole of the power source, with an electrolysis space between the electrodes, the inner pipe being made at least in its surface layer of a more electronegative material than the outer pipe, wherein the coaxial tubular metal electrodes are attached to a base and a top, wherein the base is equipped with an inlet for wastewater equipped with a valve and wherein the top is provided with a pipe connection for the discharge of water containing flakes, said device further comprising a ring which is rotatable around the inner pipe, wherein the ring is provided with vane-shaped brushes, said vane-shaped brushes consisting of brush bristles, wherein said brush bristles do not touch the surface of the outer pipe.

In a following aspect, the invention relates to an assembly for purifying wastewater comprising: (i) a device for separating contaminants from wastewater by means of electrocoagulation according to the second aspect and (ii) a separating device suitable for separating purified water and contaminants coagulated into flakes.

### BRIEF DESCRIPTION OF THE DRAWINGS

Figure 1A: A schematic overview of an electrolytic cell not according to the present invention.
**Figure 2A****:** A schematic overview of an ultrasonic cleaning not according to the present invention.
**Figure 2B****:** A detail view of an ultrasonic cleaning not according to the present invention.
**Figure 3A****:** A schematic overview of an embodiment of cleaning with vane-shaped brushes according to the present invention.
**Figure 3B****:** A detail view of an embodiment of cleaning with vane-shaped brushes according to the present invention.
**Figure 4A****:** A schematic overview of cleaning with a pressure wave or jet not according to the present invention.
**Figure 4B****:** A detail view of a jet cap not according to the present invention.

### DETAILED DESCRIPTION

The invention relates to a method for removing contaminants by means of electrocoagulation. The invention also relates to a device and assembly for purifying wastewater.

In a first aspect, the invention relates to a method for removing contaminants from wastewater by means of electrocoagulation as defined in claim 1, the method comprising the following steps:
a) passing the wastewater to be purified through an electrolytic cell which is provided with two metal electrodes with different electronegativities, consisting of coaxial pipes with the inner pipe comprising the more electronegative electrode,
b) performing electrolysis between the two electrodes, such that the more electronegative electrode, which does not wear in a cleaning process, is used to produce hydrogen gas and hydroxyl ions from water, and that the less electronegative electrode, which is an active, wearing electrode in a cleaning process, is used to produce metal ions in a solution to be cleaned,
c) producing an electric field in the electrolytic cell, whereby desired redox reactions take place to isolate one or more contaminants from the wastewater in the form of flakes,
d) passing the wastewater with said flakes from the electrolytic cell to a separation device for flakes and purified water, and
e) producing axial waves in the wastewater along the inner surface of the outer electrode intermittently, wherein the mechanical production of axial waves is produced by rotation of a ring provided with vane-shaped brushes, said vane-shaped brushes consisting of brush bristles, wherein said brush bristles do not touch the surface of the wearing electrode.

This way, wastewater can be stripped of organic waste load, while the heavy metals are also cleaned.

A 'wave' as discussed herein is a pressure wave, being a deviating pressure that [passes] through the electrolytic cell along the inner surface of the outer electrode. The effluent always flows axially through the electrolytic cell, and the pressure wave or pressure waves propagate according to the invention in the axial flow direction. The pressure waves can propagate with the flow, or against the flow. Preferably, the pressure waves propagate with the flow of the wastewater through the electrolytic cell. The pressure waves preferably propagate considerably faster than the flow of the wastewater through the electrolytic cell. The flow pattern of the effluent, which is preferably mainly laminar flow, is thus broken as little as possible. As a result, the water purification is stopped less by the cleaning of the electrode surface.

The coaxial pipes can be supplied in diameters and lengths that vary depending on a specific application. As the size of a processing plant becomes larger and the flow rate increases, it is advantageous that a sufficient number of cells are connected in parallel.

In a preferred embodiment, the axial wave propagates in the flow direction of the wastewater. This helps prevent water hammer at the feeding line of the wastewater to be cleaned and gives better results with electrocoagulation. It also ensures that we get proper purification at a constant flow rate.

The anode is the outer pipe. This is the electrode with a less electronegative surface material in which metal ions are released to the wastewater. Preferably, the anode, at least in the surface, is made of aluminium or iron. The choice between aluminium and iron depends on the pollution of the wastewater. The anode is an active, wearing electrode, and must be replaced over time. It is advantageous to use this as outer electrode. This makes it easier to replace the anode. This is also the electrode with the largest surface area, which prevents the accumulation of contamination at the anode and promotes the dissolution of metal ions in the wastewater.

The cathode is the inner pipe. This is the electrode with a less electronegative surface material. Hydrogen gas is produced from water at the cathode, so this is not an active, wearing electrode. Preferably, the cathode is made of steel. Even more preferably, the cathode is made of stainless steel.

Preferably, the length is considerably higher than the diameter. Preferably, the ratio of the length over the inner diameter, measured from the inner surface, of the outer pipe is higher than 5, even more preferably higher than 7, most preferably higher than 10.

The use of elongated, concentrically nested electrode pipes using axial waves provides a simple way to keep the electrode surface clean. The elongated concentric pipes promote a laminar flow pattern in the electrolysis space. This is advantageous for coagulating flakes, and therefore the efficiency of the cleaning process. The axial waves result in a sufficient pressure difference along the surface to keep the surface clean, without breaking this laminar flow pattern with turbulent effects such as eddies or lateral mixing, which counteracts the coagulation.

At the cathode, the electrolytic cell dissociates water into H⁺ ions and OH⁻ ions. The H⁺ ions absorb electrons and escape from the mixture as hydrogen. Since these H⁺ ions escape faster than the OH⁻ ions, a mildly alkaline solution is formed along the cathode. Metal ions dissolve in the wastewater at the anode. These metal ions then form metal hydroxides, which are poorly soluble in water for both iron and aluminium. Organic substances and heavy metals coprecipitate with the formed metal hydroxides. The precipitate rises together with H₂ gas as a flake to the surface of clean water.

The oxidation of iron into Fe²⁺ or Fe³⁺ ions and the purification of the wastewater take place in a cell at a certain point of resonance energy. In other words, the electrical energy that is introduced into a cell must be dimensioned according to the dimensioning and flow of the cell, i.e. the retention time of wastewater in the cell space. The search for a good point in resonance energy must be carried out experimentally and then the cell flow regulated by automation with respect to the wastewater flow. This is considerably more difficult when the surface of the anode rapidly becomes contaminated, since this contamination strongly drives up the resonance energy. The use of the axial waves keeps the surface clean for longer periods, making the process easier to control.

The through-flow of wastewater does not have to be interrupted during an axial pressure wave or jet, because the rinsing with a jet is carried out at a considerably higher pressure and with a smaller liquid volume than the pressure and liquid volume of through-flowing wastewater.

According to a not claimed embodiment, the axial waves are ultrasonic. Ultrasonic waves are well suited for cleaning a surface. Ultrasonic cleaning can be done intermittently or continuously and gives a long-lasting clean surface along the anode.

According to a further not claimed preferred embodiment, the ultrasonic waves are produced in the wastewater to be purified before it is passed through the electrolytic cell.

Ultrasonic devices for liquids are available on the market. These comprise, among others, Y-shaped tubes, one leg containing the ultrasonic device and the other legs allowing the liquid to flow through. Producing ultrasonic waves in the wastewater means no further addition of liquids or chemicals for proper cleaning. Although these devices are not simple, they are available on the market and easy to install. The device can namely be placed in series upstream from the electrolytic cell.

In a preferred not claimed embodiment, the ultrasonic waves have a frequency between 20 and 200 kHz, preferably between 20 and 100 kHz, even more preferably between 20 and 60 kHz.

These frequencies result in a clean surface, with only minor adverse effects on the coagulation of contaminants into flakes. Preferably, the ultrasonic waves are used only intermittently, where necessary, to keep the surface clean.

In another embodiment, the invention comprises rinsing the electrolytic cell with an axial jet or pressure wave.

This jet or pressure wave can propagate in the wastewater or other liquid medium. Preferably, the jet or pressure wave is produced by bringing the cell into contact with a pressurised rinsing liquid in an axial direction. Preferably, this is done during a very short period. Preferably, the pressure of the rinsing liquid is between 0.5 and 3 bar, even more preferably between 0.6 and 2.5 bar, even more preferably between 0.6 and 2.0 bar, even more preferably between 0.6 and 1.5, even more preferably between 0.8 and 3 1.2 bar and most preferably between 0.9 and 1.1 bar.

This method produces a pressure wave that propagates axially through the wastewater. Hereby the eddies and lateral (in this case in the radial and tangential direction with respect to the coaxial electrodes) mixing are prevented. Thus, coagulated flakes are not pulled apart and only slightly affected. However, the surface does remain clean. The jet can be used at relatively long intervals, for example every minute to every 2 hours. Preferably, the intervals are between 5 minutes and 2 hours. The length of the intervals mainly depends on the amount of contamination, which depends on the amount and type of impurities in the water that can be removed by electrocoagulation.

The rinsing liquid can be any liquid, preferably water. Even more preferably, recycled 'purified' water from the separation device, which is located downstream from the electrolytic cell.

The invention comprises producing axial waves by means of vanes. The vanes consist of brushes. These brushes give less cause for eddies and break coagulating flakes less. The liquid passes more or less through the brushes, and the flakes stick to the brushes. Coagulation with vane-shaped brushes is thus not strongly prevented, but a clean surface is nevertheless obtained.

These brushes do not touch the surface of the outer pipe. The brushes do not abut the surface of the outer pipe. The clean scrubbing of the surface of the outer pipe is accompanied by a faster wear of the active electrode. The surface is not cleaned by the scrubbing of the brushes against the surface, but by the flow brought about by said brushes. In an embodiment, the brushes can move axially so as to cause this flow. An axial pressure wave results from the axial movement of the brush.

The brushes are vane-shaped and can rotate, thereby creating axial flow. In a preferred embodiment, the brushes can both move axially and rotate, and are still vane shaped.

Preferably, the brush is used only intermittently. Although the present embodiments attempt to prevent the breaking up of flakes, the cleaning of the anode surface is detrimental to purifying the wastewater. Optimising the time between cleaning the surface can be done by trial and error and is trivial for a person skilled in the art.

Preferably, the brushes consist of materials that are resistant to both slightly acidic and slightly basic conditions. Preferably, the brushes consist of a non-electrically conductive material. Even more preferably, the brushes consist of polypropylene or polyamide.

In an embodiment, the cell is cleaned intermittently. The cell can thus be used as much as possible with a strict laminar flow pattern, which is beneficial to coagulation. The length of the intervals can be determined with the help of trial and error. In a preferred embodiment, the cell is operated at a constant current intensity, and the cell is cleaned when the voltage necessary to maintain this constant current with respect to a clean cell increases by more than 30%, preferably the increase is more than 25%, even more preferably the increase is more than 20%, even more preferably the increase is more than 15%, most preferably the increase is more than 10%. Preferably, the increase of voltage at a constant current is at least 1% before the electrolytic cell is cleaned. Even more preferably, the increase is at least 3%, most preferably at least 5%. Allowing a high voltage before cleaning leads to a very high power consumption and/or low consistency in water treatment. Cleaning at very low increases in voltage leads to frequent cleaning, which disrupts the flow pattern in the electrolytic cell. Selected values lead to an optimum, in order to achieve a constant water treatment with a relatively low power consumption.

In a second aspect, the invention comprises a device for removing contaminants from wastewater by means of electrocoagulation as defined in claim 5, comprising two coaxial tubular metal electrodes, an inner and an outer pipe, the inner pipe being coupled to a negative pole of a power source and the outer pipe being coupled to a positive pole of the power source, with an electrolysis space between the electrodes, the inner pipe being made at least in its surface layer of a more electronegative material than the outer pipe, wherein the coaxial tubular metal electrodes are attached to a base and a top, wherein the base is equipped with an inlet for wastewater equipped with a valve and wherein the top is provided with a pipe connection for the discharge of water containing flakes, said device further comprising a ring which is rotatable around the inner pipe, wherein the ring is provided with vane-shaped brushes, said vane-shaped brushes consisting of brush bristles,, wherein said brush bristles do not touch the surface of the outer pipe.

This is a simple set-up that is easily adjustable and maintainable. The continuous cleaning of the surface makes the control of the electrolytic cell easier. The pressure wave can be produced by briefly opening and closing the axial valve. Furthermore, the same electrolytic cell is stored. Without contamination along the outer pipe, electrocoagulation provides better water purification and more consistent water purification when the electrolytic cells are operational for a long time.

In a not claimed preferred embodiment, the jet cap comprises an opening suitable for emptying the electrolysis space of wastewater and flakes.

This is advantageous for the maintenance of the electrolytic cell, for, among other things, replacing the active, wearing electrode. Furthermore, the cell must still be cleaned after a while.

A not claimed embodiment of the device for removing contaminants from wastewater by means of electrocoagulation, wherein said partitions are arranged obliquely, preferably at an angle of 0-40°, even more preferably an angle of 10-25°.

A swirling jet can be produced with the aid of skewed partitions. This introduces a limited amount of turbulence into the system. This benefits the purification of the surface. Since the eddy propagates through the medium only once, the influence on coagulation in the electrolytic cell is small. Nevertheless, a small angle is preferably used so that flakes are carried along by the eddy rather than pulled apart.

In a further, not claimed preferred embodiment, the invention comprises a jet cap which comprises two radial openings and one axial opening, the radial openings being located at a different height with respect to the axis.

The highest located radial opening is suitable for the supply of water. The lowest located radial opening is suitable for emptying the cell for maintenance. The axial opening is suitable for producing the axial jet. This very simple construction makes it possible to operate the electrolytic cell efficiently.

In a further, not claimed preferred embodiment, the jet cap comprises four partitions, which define four compartments, the radial openings opening into opposite compartments, and the axial opening opening into intermediate compartments.

This partially prevents water hammer in the radial openings, mainly the feed pipe for the wastewater to be cleaned. Furthermore, the partitions help to direct the pressure wave evenly and axially. This way the flakes are less disturbed by the jet.

Preferably, the inner electrode is made of steel, at least in the surface layer. Steel is advantageous since the alloy can be controlled for electronegativity. Thus, with a good choice of steel, the difference in electronegativity can be controlled. Preferably, the outer electrode consists of iron or aluminium. Both are inexpensive, easy to process and both iron hydroxide and aluminium hydroxide are poorly soluble in water. Furthermore, iron hydroxide and aluminium hydroxide coagulate well with contaminants such as heavy metals.

In the third aspect, the invention comprises an assembly for purifying wastewater comprising: (i) a device for separating contaminants from wastewater by means of electrocoagulation according to the second aspect and (ii) a separating device suitable for separating purified water and contaminants coagulated into flakes.

Thanks to the cleaning of the surface of the electrolytic cell according to the second aspect, a more consistent water quality and more consistent flake properties are obtained. This also makes the efficient separation of purified water and flakes easier.

### EXAMPLES

### Example 1 (not according to the invention)

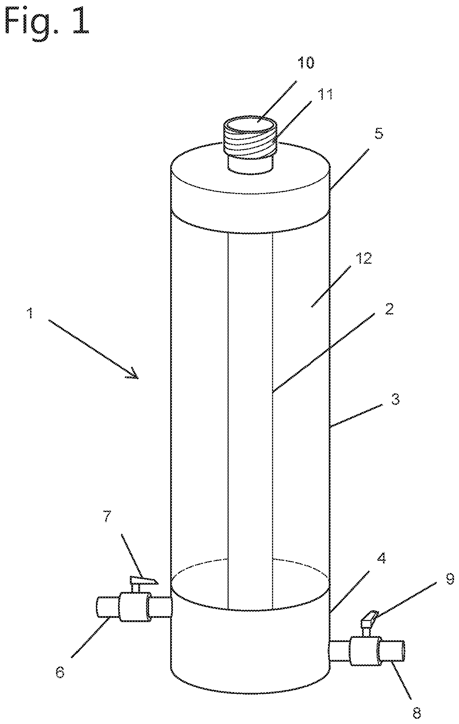

An electrolytic cell 1 is shown in Figure 1. This electrolytic cell 1 consists of two concentric pipes, the inner 2 consisting of steel and the outer 3 consisting of iron. Here the outer electrode 3 is more electronegative. The inner electrode 2 has a radius of 4 cm and a length of 100 cm. The outer electrode 3 has a radius of 7 cm and a length of 100 cm. The concentric pipes 2, 3 are attached at the bottom to a base 4, and at the top to a top 5.

This base holds the electrodes in their concentric position and is radially equipped with two valves 7, 9. A first valve 7 is suitable for supplying wastewater to the electrolytic cell. A second, lower located valve 9 is suitable for emptying the electrolytic cell 1 for maintenance. This is desirable for the complete cleaning of the cell or replacement of an affected outer electrode 3.

The top 5 has two concentric fastening rings at the bottom. These fit closely with the electrodes and hold them in a fixed position. The top is provided centrally at the top with a pipe connection 10, 11. This is intended for the discharge of water containing flakes of coagulated impurities to a separating device, preferably a separation tower.

The effluent arrives at the bottom and is passed through cell 1 between the concentric electrodes 12. In the cell under the influence of redox reactions, contaminants coagulate into flakes. In the top, the water is conducted from between the two electrodes to a central position 10 and is discharged along this central position 10 to a separation tower. The cell can process flow rates between 100 and 1000 l/h. The current intensity in the cell is between 5 and 250 amperes. The electrical voltage in the cell is between 1 and 60 volts. The rate of coagulation in the cell is proportional to the electrical power in the cell. The average consumption of the electrolytic cell is 1.5 kWh/m³. The maximum consumption of the electrolytic cell is 5 kWh/m³.

The cleansing capacity of the cell was tested. Heavy metals were almost completely removed from the wastewater. Many organic compounds were also not found in the purified water. The chemical oxygen demand of the water (COD) decreased considerably.

In the case of salt water, the water was only partially desalted. Alkali metal ions were virtually not removed. Alkaline earth metal ions were partially removed, usually between 30 and 60%. Ions of other metals, mainly heavy metals, including Ni, Co, Cu, Zn, Ag and Sn are almost completely removed. More than 95% of the ions of these metals are removed from the wastewater. The cleaning capacity depends on the electrical power acting on the cell.

If the cell 1 is not continuously cleaned, flakes also coagulated along the outer, active electrode 3. There, these flakes form a film. Once this contaminating layer forms along the surface, it grows rapidly due to coagulation. These layer of impurities along the electrode lead to a considerably higher current consumption for the same cleaning capacity of cell 1. As the layer grows rapidly, this current consumption also increases rapidly. In the case of a heavily contaminated active electrode, an increase in the electrical power is not sufficient to guarantee the cleaning capacity of the cell. Cell 1 is operated at a constant current intensity. When the voltage rises by more than 10% compared to the clean electric cell, said cell was cleaned.

### Example 2 (not according to the invention)

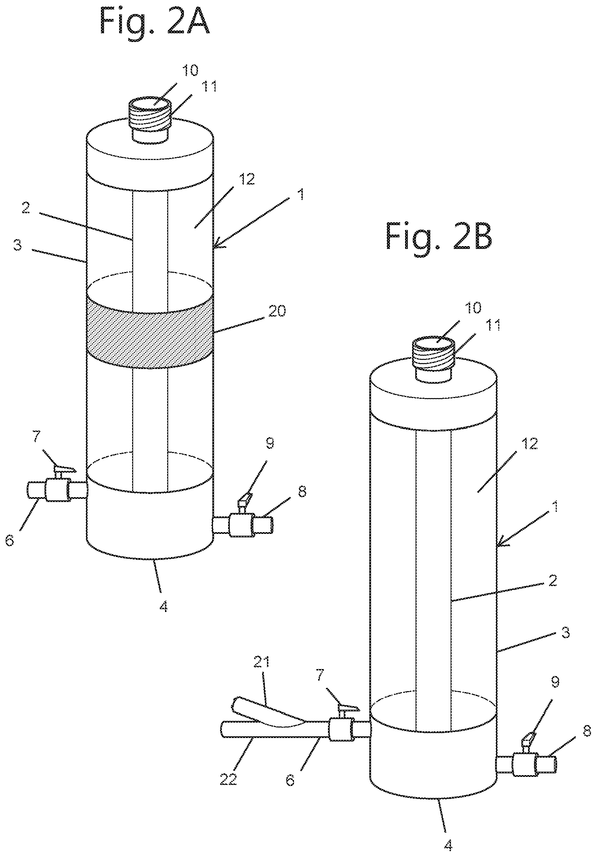

The same electrolytic cell 1 as in the preceding example was equipped with an ultrasonic wave generator 20. This wave generator 20 was placed centrally over the entire circumference of the reactor 1 as shown in Figure 2A. The wave generator 20 produces ultrasonic waves, which break up the contaminating layer and detach it from the electrode. The flakes are carried along with the effluent and separated in the separation tower. The wave generator was activated every 15 minutes for 30 seconds. The ultrasonic waves have a frequency of 40 kHz.

### Example 3 (not according to the invention)

The same electrolytic cell 1 as in the first example was equipped with an ultrasonic wave generator 21. This wave generator was provided with a Y-shaped tube 21 in one leg. The other leg 22 of the Y-shaped tube allows the influent through. This Y-shaped tube was placed in front of the electrolytic cell. The device produces ultrasonic waves in the influent, which causes some degree of turbulence. This significantly delayed the formation of a contaminating layer and can remove the contamination itself. If, after a considerable period of time, a contaminating layer is still formed, the ultrasonic device is installed for a longer period of time, e.g. 2 min. In certain places it was broken by the turbulence, and the resulting flakes carried by the water to the separation tower.

Compared to the preceding examples, this ensured that for heavily organically loaded wastewater the contaminating film along the inside surface of the outer electrode 3 is not formed after 8 hours of operation and that a jet with water is no longer required. Furthermore, this arrangement also proved to improve the cleaning capacity of cell 1.

### Example 4 (not according to the invention)

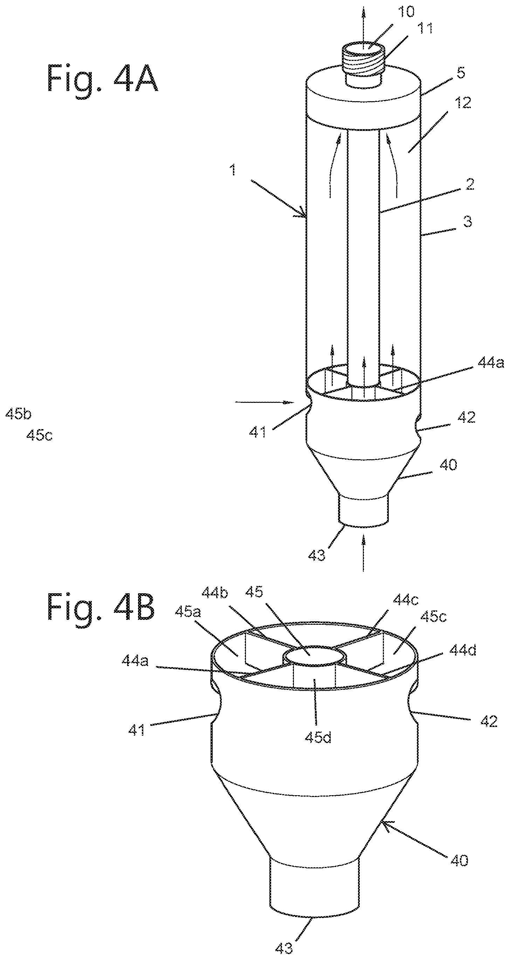

The same electrolytic cell 1 as in the first example, wherein the base is replaced by a jet cap 40 as shown in Figure 4A. The jet cap 40 is shown in detail in Figure 4B. Like the base in Example 1, this jet cap 40 has two radial connections, one for supplying wastewater 41 and one for emptying the tank 42. However, the nozzle has a third axial connection 43 on the same axis as the concentric pipes. The jet cap is provided with four radial partitions 44a, 44b, 44c, 44d, resulting in four different semi-open compartments 45a, 45b, 45c, 45d.

The first compartment is connected to the influent supply 45a. The third compartment 45c is connected to the valve for emptying the tank. The second 45b and fourth compartment 45d are connected to the axial connection. The radial partitions 44a, 44b, 44c, 44d do not extend all the way to the bottom of the jet cap 40. All the compartments are connected to the axial connection 43 completely at the bottom of the jet hat 40. This results in a jet in each of the four compartments 45a, 45b, 45c, 45d. This also causes the influent water that enters the cell to be sucked along, which increases the acceleration and the flow. The partitions 44a, 44b, 44c, 44d do, however, extend through the connection for the influent 41. This creates an axial wave and partially counteracts water hammer.

In use, a rinsing liquid was pushed through cell 1 at a pressure of 1 bar along this axial connection 43. The rinsing liquid contains purified water. Thanks to the high pressure, the rinsing liquid is pushed through the cell, creating a jet that moves through the cell. Behind this jet, a negative pressure develops, which pulls along the effluent. This creates some turbulence.

The cell was rinsed for 1 minute every 30 minutes. This significantly prevented the formation of the contaminating layer.

### Example 5 (according to the invention)

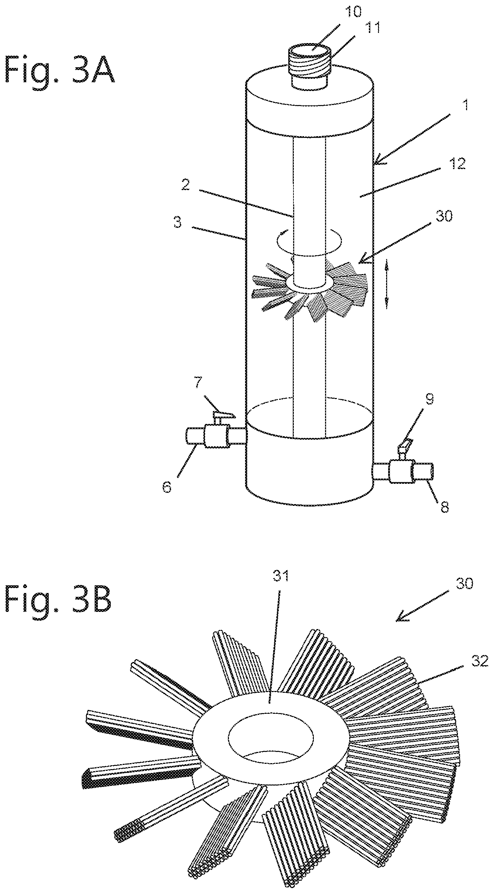

The same electrolytic cell 1 as in the first example, further provided with a rotatable brush 30, is shown in Figure 3A. The brush is shown in detail in Figure 3B. The brush can rotate around the inner pipe 2, as well as move axially along this pipe by means of a fastening ring 31. The brush bristles 32 consist of a plastic such as: polypropylene or polyamide, and do not come into contact with the inner surface of the outer electrode 3. The brush 30 is tilted, at an angle of 45°.

The surface of the outer electrode 3 was not cleaned by the brushing of a brush 30 against this surface, since the brush 30 does not touch this surface. The turbulence and flow, which the brush 30 formed as a vane causes, provides an axial flow along the inner surface of the outer electrode 3. This flow reduces the coagulation of the flakes against this surface. The flakes are mainly carried by the flow to the separation tower. Thanks to the angle and the existence of space between each row of brush bristles 32, only a small part of the flakes is carried along by the brush 30. Nevertheless, some of the coagulated flakes remain hanging along the brush 30. If too many flakes coagulate on the brush 30, they come loose due to the flow and are carried along with the water.

### Example 6 (not according to the invention)

The same electrolytic cell 1 as in the first example, wherein the cell is purified by rinsing with hot water. To this end, the cell 1 is first emptied, with the aid of the outlet 8 which is lower than the inlet for wastewater 6. The wastewater is collected and later recycled to the inlet 6.

The empty electrolytic cell 1 is rinsed with hot water. Detergents, surfactants, pH regulators, silica and other substances can also be added to the hot water for good cleaning. In this example, water containing citric acid and a small amount of detergent is used. The result is good cleaning which almost completely removes the contaminating film. The cell 1 is rinsed every 2 hours.

### Example 7 (not according to the invention)

The same electrolytic cell 1 as in the fourth example, wherein the jet cap is adapted to a rotating jet cap. A rotating jet cap has a structure like the jet cap in Example 4, but the partitions have been partially replaced by a rotating nozzle near the axis of the electrolytic cell. This rotating nozzle produces a jet wave with cleaning liquid, with which a surprisingly good cleaning of the electrodes was obtained.

The jet cap allows, on the one hand, to admit influent into the electrocoagulation reactor and, on the other hand, to supply a jet with cleaning liquid under pressure. This jet is supplied at a pressure of 2 to 16 bar to the connection of the cleaning liquid of the nozzle of the jet cap. The cleaning liquid may comprise water, wastewater, hot water, organic solvents, detergents and surfactants, depending on the application.

Just like the base in examples 1 and 4, the jet cap has two radial connections, one for supplying wastewater and one for emptying the tank. The jet cap also has a third axial connection on the same axis as the concentric pipes. The jet cap is equipped with a rotating nozzle for producing a jet. This nozzle is arranged so that the jet propagates upwards from the bottom to the top through the jet.

The nozzle consists of a housing, provided with a connection for the supply line of the cleaning fluid and an outlet for the cleaning fluid and a nozzle body through which the cleaning fluid flows. The third axial connection of the jet cap is connected to the nozzle entrance so that the cleaning fluid can be supplied through it.

The nozzle body has a spherical end. The nozzle body is provided in the housing and is mounted at the spherical end on a pan-shaped bearing which is provided around the outlet of the housing. The nozzle body is made to rotate through the flow of cleaning fluid through the housing. The longitudinal axis of the nozzle body revolves around a generated cone. The bearing supporting the nozzle body is formed by a depression arranged in the inner wall of the housing, concentric with respect to the outlet of the housing.

With the help of this improved cleaning technique, the flow of wastewater that is cleaned by the coagulation cell could be increased to 2-5 m³ of wastewater per hour. The cell remained sufficiently clean for long-term use.

## Claims

1. Method for removing contaminants from wastewater by means of electrocoagulation, the method comprising the following steps:
a) passing wastewater to be purified through an electrolytic cell (1) which is provided with two metal electrodes (2, 3) with different electronegativities, consisting of coaxial pipes, the inner pipe (2) comprising the more electronegative electrode,
b) performing electrolysis between the two electrodes (2, 3), such that the more electronegative electrode (2), which does not wear in a cleaning process, is used to produce hydrogen gas and hydroxyl ions from water, and that the less electronegative electrode (3), which is an active, wearing electrode (3) in a cleaning process, is used to produce metal ions in a solution to be cleaned,
c) producing an electric field in the electrolytic cell (1), whereby desired redox reactions take place to isolate one or more contaminants from the wastewater in the form of flakes,
d) passing the wastewater with said flakes from the electrolytic cell (1) to a separation device for flakes and purified water, **characterised by the step of,**
e) producing axial waves in the wastewater along the inner surface of the outer electrode intermittently (3), wherein the mechanical production of axial waves is produced by rotation of a ring (31) provided with vane-shaped brushes, said vane-shaped brushes consisting of brush bristles (32), wherein said brush bristles (32) do not touch the surface of the wearing electrode (3).

2. Method for removing contaminants from wastewater according to claim 1, wherein the brushes can move axially.

3. Method for removing contaminants from wastewater according to any of claims 1 or 2, wherein the electrolytic cell used as much as possible with a strict laminar flow pattern.

4. Method for removing contaminants from wastewater according to any of claims 1-3, wherein the brushes consist of polypropylene or polyamide.

5. Device for removing contaminants from wastewater (1) by means of electrocoagulation, comprising two coaxial tubular metal electrodes, an inner (2) and an outer pipe (3), the inner pipe (2) being coupled to a negative pole of a power source and the outer pipe (3) being coupled to a positive pole of the power source, with an electrolysis space between the electrodes, the inner pipe (2) being made at least in its surface layer of a more electronegative material than the outer pipe (3), wherein the coaxial tubular metal electrodes are attached to a base (4) and a top (5), wherein the base (4) is equipped with an inlet for wastewater (6) equipped with a valve (7) and wherein the top (5) is provided with a pipe connection for the discharge of water containing flakes, said device further comprising a ring (31) which is rotatable around the inner pipe (2), wherein the ring (31) is provided with vane-shaped brushes, said vane-shaped brushes consisting of brush bristles (32), wherein said brush bristles (32) do not touch the surface of the outer pipe (3).

6. Device for removing contaminants from wastewater (1) by means of electrocoagulation according to claim 5, wherein the inner electrode (2) consists of steel at least in the surface layer and the outer electrode (3) consists of iron or aluminium at least in the surface layer.

7. Assembly for purifying wastewater, comprising (i) a device for separating contaminants from wastewater (1) by means of electrocoagulation according to any of the preceding claims 5-6, and (ii) a separating device suitable for separating purified water and contaminants coagulated into flakes.

## Patentansprüche

1. Verfahren zum Entfernen von Verunreinigungen aus Abwasser mittels Elektrokoagulation, wobei das Verfahren die folgenden Schritte umfasst:
a) Durchleiten von zu reinigendem Abwasser durch eine elektrolytische Zelle (1), die mit zwei Metallelektroden (2, 3) mit unterschiedlichen Elektronegativitäten versehen ist, welche aus koaxialen Rohren bestehen, wobei das innere Rohr (2) die elektronegativere Elektrode umfasst,
b) Durchführen einer Elektrolyse zwischen den zwei Elektroden (2, 3) derart, dass die elektronegativere Elektrode (2), die in einem Reinigungsprozess nicht verschleißt, verwendet wird, um aus Wasser Wasserstoffgas und Hydroxyl-Ionen zu produzieren, und die weniger elektronegative Elektrode (3), die eine aktive, verschleißende Elektrode (3) in einem Reinigungsprozess ist, verwendet wird, um in einer zu reinigenden Lösung Metallionen zu produzieren,
c) Produzieren eines elektrischen Feldes in der elektrolytischen Zelle (1), wodurch gewünschte Redoxreaktionen stattfinden, um aus dem Abwasser eine oder mehrere Verunreinigungen in Form von Flocken zu isolieren,
d) Leiten des Abwassers mit den Flocken von der elektrolytischen Zelle (1) zu einer Abscheidevorrichtung für Flocken und gereinigtes Wasser, **gekennzeichnet durch den folgenden Schritt,**
e) intermittierendes Produzieren von axialen Wellen in dem Abwasser entlang der Innenfläche der äußeren Elektrode (3), wobei die mechanische Produktion axialer Wellen durch Drehen eines Rings (31) produziert wird, der mit flügelförmigen Bürsten versehen ist, wobei die flügelförmigen Bürsten aus Bürstenborsten (32) bestehen, wobei die Bürstenborsten (32) die Oberfläche der verschleißenden Elektrode (3) nicht berühren.

2. Verfahren zum Entfernen von Verunreinigungen aus Abwasser nach Anspruch 1, wobei sich die Bürsten axial bewegen können.

3. Verfahren zum Entfernen von Verunreinigungen aus Abwasser nach einem der Ansprüche 1 oder 2, wobei die elektrolytische Zelle so viel wie möglich mit einem strikten laminaren Fließmuster verwendet wird.

4. Verfahren zum Entfernen von Verunreinigungen aus Abwasser nach einem der Ansprüche 1-3, wobei die Bürsten aus Polypropylen oder Polyamid bestehen.

5. Vorrichtung zum Entfernen von Verunreinigungen aus Abwasser (1) mittels Elektrokoagulation, zwei koaxiale röhrenförmige Elektroden, ein inneres (2) und ein äußeres Rohr (3) umfassend, wobei das innere Rohr (2) an einen negativen Pol einer Energiequelle gekoppelt ist und das äußere Rohr (3) an einen positiven Pol der Energiequelle gekoppelt ist, mit einem Elektrolyseraum zwischen den Elektroden, wobei das innere Rohr (2) zumindest in seiner Oberflächenschicht aus einem elektronegativeren Material als das äußere Rohr (3) gefertigt ist, wobei die koaxialen röhrenförmigen Metallelektroden an einer Basis (4) und einer Oberseite (5) angebracht sind, wobei die Basis (4) mit einem Einlass für Abwasser (6) ausgestattet ist, der mit einem Ventil (7) ausgestattet ist, und wobei die Oberseite (5) mit einem Rohranschluss für das Ablassen von Wasser, das Flocken enthält, versehen ist, wobei die Vorrichtung ferner einen Ring (31) umfasst, der um das innere Rohr (2) drehbar ist, wobei der Ring (31) mit flügelförmigen Bürsten versehen ist, wobei die flügelförmigen Bürsten aus Bürstenborsten (32) bestehen, wobei die Bürstenborsten (32) die Oberfläche des äußeren Rohrs (3) nicht berühren.

6. Vorrichtung zum Entfernen von Verunreinigungen aus Abwasser (1) mittels Elektrokoagulation nach Anspruch 5, wobei die innere Elektrode (2) zumindest in der Oberflächenschicht aus Stahl besteht und die äußere Elektrode (3) zumindest in der Oberflächenschicht aus Eisen oder Aluminium besteht.

7. Anordnung zum Reinigen von Abwasser, umfassend (i) eine Vorrichtung zum Abscheiden von Verunreinigungen aus Abwasser (1) mittels Elektrokoagulation nach einem der vorhergehenden Ansprüche 5-6, und (ii) eine Abscheidevorrichtung, die zum Abscheiden von gereinigtem Wasser und Verunreinigungen, die zu Flocken koaguliert sind, geeignet ist.

## Revendications

1. Procédé d'élimination des contaminants des eaux usées au moyen d'une électrocoagulation, le procédé comprenant les étapes suivantes :
a) le passage d'eaux usées à purifier à travers une cellule électrolytique (1) qui est munie de deux électrodes métalliques (2, 3) avec des électronégativités différentes, constituées de tuyaux coaxiaux, le tuyau intérieur (2) comprenant l'électrode la plus électronégative,
b) l'effectuation d'une électrolyse entre les deux électrodes (2, 3), de telle sorte que l'électrode la plus électronégative (2), qui ne s'use pas lors d'un processus de nettoyage, est utilisée pour produire de l'hydrogène gazeux et des ions hydroxyle à partir de l'eau, et que l'électrode la moins électronégative (3), qui est une électrode d'usure active (3) dans un processus de nettoyage, est utilisée pour produire des ions métalliques dans une solution à nettoyer,
c) la production d'un champ électrique dans la cellule électrolytique (1), moyennant quoi des réactions redox souhaitées ont lieu pour isoler un ou plusieurs contaminants des eaux usées sous forme de flocons,
d) le passage des eaux usées avec lesdits flocons depuis la cellule électrolytique (1) vers un dispositif de séparation des flocons et de l'eau purifiée, **caractérisé par l'étape de,**
e) production d'ondes axiales dans les eaux usées le long de la surface interne de l'électrode externe de façon intermittente (3), dans lequel la production mécanique d'ondes axiales est réalisée par rotation d'un anneau (31) muni de brosses en forme d'aube, lesdites brosses en forme d'aube étant constituées de poils de brosse (32), dans lequel lesdits poils de brosse (32) ne touchent pas la surface de l'électrode d'usure (3).

2. Procédé d'élimination des contaminants des eaux usées selon la revendication 1, dans lequel les brosses peuvent se déplacer axialement.

3. Procédé d'élimination des contaminants des eaux usées selon l'une quelconque des revendications 1 ou 2, dans lequel la cellule électrolytique est utilisée autant que possible avec un modèle d'écoulement laminaire strict.

4. Procédé d'élimination des contaminants des eaux usées selon l'une quelconque des revendications 1 à 3, dans lequel les brosses sont constituées de polypropylène ou de polyamide.

5. Dispositif pour éliminer des contaminants des eaux usées (1) au moyen d'une électrocoagulation, comprenant deux électrodes métalliques tubulaires coaxiales, un tuyau interne (2) et un tuyau externe (3), le tuyau interne (2) étant couplé à un pôle négatif d'une source d'alimentation et le tuyau externe (3) étant couplé à un pôle positif de la source d'alimentation, avec un espace d'électrolyse entre les électrodes, le tuyau interne (2) étant constitué au moins dans sa couche superficielle d'un matériau plus électronégatif que le tuyau externe (3), dans lequel les électrodes métalliques tubulaires coaxiales sont fixées à une base (4) et à un sommet (5), dans lequel la base (4) est équipée d'une entrée pour les eaux usées (6) équipée d'une vanne (7) et dans lequel le sommet (5) est pourvu d'un raccord de tuyau pour l'évacuation de l'eau contenant des flocons, ledit dispositif comprenant en outre un anneau (31) qui peut tourner autour du tuyau interne (2), dans lequel l'anneau (31) est pourvu de brosses en forme d'aube, lesdites brosses en forme d'aube étant constituées de poils de brosse (32), dans lequel lesdits poils de brosse (32) ne touchent pas la surface du tuyau externe (3).

6. Dispositif pour éliminer des contaminants des eaux usées (1) au moyen d'une électrocoagulation selon la revendication 5, dans lequel l'électrode interne (2) est constituée d'acier au moins dans la couche superficielle et l'électrode externe (3) est constituée de fer ou d'aluminium au moins dans la couche superficielle.

7. Assemblage permettant de purifier des eaux usées, comprenant (i) un dispositif pour séparer les contaminants des eaux usées (1) au moyen d'une électrocoagulation selon l'une quelconque des revendications précédentes 5 à 6, et (ii) un dispositif de séparation approprié pour séparer l'eau purifiée et les contaminants coagulés en flocons.
